# EUROPEAN PATENT SPECIFICATION

(11) **EP 1 412 204 B1**
(45) Date of publication and mention of the grant of the patent: **08.10.2008**
(21) Application number: 02749449.1
(22) Date of filing: 02.08.2002
(51) Int. Cl.: B60B 27/00, B62D 7/18

(54) **TRUCK HUB BEARING UNIT WITH ROTATABLE INNER RING**
RADNABELAGERVORRICHTUNG FÜR LASTKRAFTWAGEN MIT DREHBAREM, INNEREM RING
ROULEMENT DE MOYEU DE CAMION A ANNEAU INTERIEUR ROTATIF

(30) Priority: 03.08.2001 NL 1018698
(43) Date of publication of application: 28.04.2004
(73) Proprietor: AB SKF, 415 50 Göteborg (SE)
(72) Inventor: TANKE, Jesko-Henning, D-97422 Schweinfurt (DE); DITTMAR, Rico, D-98574 Schmalhalden (DE); KAPAAN, Hendrikus, Jan, NL-3435 DM Nieuwegein (NL); KARLSSON, Mats, Arne, Kurt, Gothenburg (SE); MEANEY, Paul, Bernard, NL-3584 GS Utrecht (NL)
(74) Representative: van Westenbrugge, Andries
(86) International application number: PCT/NL2002/000524
(87) International publication number: WO 2003/011613

(56) References cited:
- EP-A- 0 489 233
- WO-A-01/48390
- WO-A-93/14946
- DE-A- 19 700 313
- PATENT ABSTRACTS OF JAPAN vol. 2000, no. 21, 3 August 2001 (2001-08-03) & JP 2001 106112 A (DANA CORP), 17 April 2001 (2001-04-17)

## Description

The invention is related to a t truck or trailer hub bearing unit, comprising two rolling element bearings, which comprise an inner ring means and an outer ring means provided with raceways which are in rolling contact with two series of rolling elements, a fixed member for connection to the wheel suspension of the truck and a rotatable member for supporting a wheel, said rotating member being supported with respect to the fixed member by means of said taper roller bearings, the outer ring means being connected to the fixed member and the inner ring means being connected to the rotatable member.

A truck hub bearing unit of this type according to the preamble of claim 1, is disclosed in DE-A-19700313. Said prior art truck hub bearing unit is suspended in a steerable fashion, and is connected to a drive shaft. Further related truck hub bearings are known from WO 931 14946A and EP 0 489 233 A.

The object of the invention is to provide a truck hub bearing unit which is in particular fit for the steerable, non-driven wheels of a vehicle. To that end the fixed element is provided with kingpin fixing means.

Said kingpin fixing means can comprise a throughgoing bore, which is oriented transversely with respect to the axis of the taper roller bearings. The bore may have stepped portions of different diameter, the stepped portion with the larger diameter being positioned above the other stepped portion(s) to fit in a complete self contained, preloaded, lubricated and sealed for life kingpin unit. Alternatively, the kingpin may also have separate preloaded bearings e.g. taper bearings.

At the top and the bottom of the bore taper roller bearings in back-to-back or "O"configuration arrangement may be provided, as well as a kingpin, which is supported with respect to the fixing element by means of said bearings. Said kingpin can be provided with integrated inner rings, and the outer ring means has stepped diameter portions corresponding to the stepped diameter bore of the fixing member, or alternatively to fit separate bearings e.g. taper roller bearings. The kingpin has connection means at is top end and bottom end for connecting the fork end of a truck suspension thereto. Such kingpin with bearings and fixing means may be self contained, preloaded, lubricated and sealed for life.

In a preferred embodiment, the fixed member comprises a corner housing having a bore within which the rolling element bearings are accommodated, e.g. taper roller bearings or angular contact ball bearings or a combination of these. The bearings can therefore be preassembled within the corner housing, which means i.e. that the required preload or play within the bearings can be carried out by the bearing manufacturer under optimal conditions, such as in a clean environment and with the help of dedicated equipment. Moreover the bearings are well protected within the corner housing. The bearing unit is self contained, preloaded (or provided with play) and sealed for life.

The inner ring means may comprise a common inner ring provided with two raceways. Said common inner ring may extend beyond the corner housing and carries a hub provided with a mounting flange for mounting a wheel thereto. At its end which protrudes out of the corner housing, the common inner ring may have a radially outwardly protruding mounting flange onto which the hub is connected, e.g. by means of bolts which are screwed in screw threaded bores in said mounting flange.

The specific layout of the truck or trailer hub bearing unit according to the invention has the further advantage that the hub can be provided with a sleeve part which overlaps and at least partly surrounds the corner housing, a gap being present in the overlap area. Onto this sleeve part, the brake disc may be mounted. Thereby on the one hand a compact layout is obtained with limited radial dimension, and on the other hand a gap is available between the sleeve and the corner housing, which gap forms a heat barrier. Thus, the heat generated in the brake disc as a result of braking action cannot easily reach the bearings. To this end, also heat transfer may be obtained by means of cooling ribs on the corner housing, or fan ribs in the bore of the rotating sleeve.

Additionally, the common inner ring may have a bore which is provided with fixing means, e.g. an internal screw thread, and the corner housing may have an abutment, said fixing means and abutment being intended for engagement with a dismounting tool for dismounting the taper roller bearings. By screwing a dismounting screw in said internal screw thread, and abutting the end thereof to the abutment, the bearings can be forced out of the bore in the corner housing by applying a sustained screw action. A similar process can be applied for mounting the bearings into the bore of the corner housing, in case the corner housing is provided with a screw threaded bore which is aligned with the bore, and the inner ring means has an abutment, said screw threaded bore and abutment being intended for engagement with a mounting tool for mounting the taper roller bearings. In order to allow for mounting at service conditions the bolts in the flanged inner ring are in contact with the outer ringsection in pre-stressed condition. Doing so the inner ring and outer ring behave as "one piece" during pressing in which has then a negligible influence on the bearing pre-load.

The invention will now be described further with reference to the figures.

Figure 1 shows a knuckle for the truck corner module according to the invention in cross section and perspective.

Figure 2 shows the knuckle in perspective.

Figure 3 shows the knuckle in the view of figure 1, together with a bearing arrangement.

Figure 4 shows the truck corner module according to the invention in cross section and in perspective.

Figure 5 shows the truck corner module in perspective.

Figure 6 shows the step of assembling the truck corner module according to figures 4 and 5 with the vehicle suspension.

Figure 7 shows the complete assembly in cross section and in perspective.

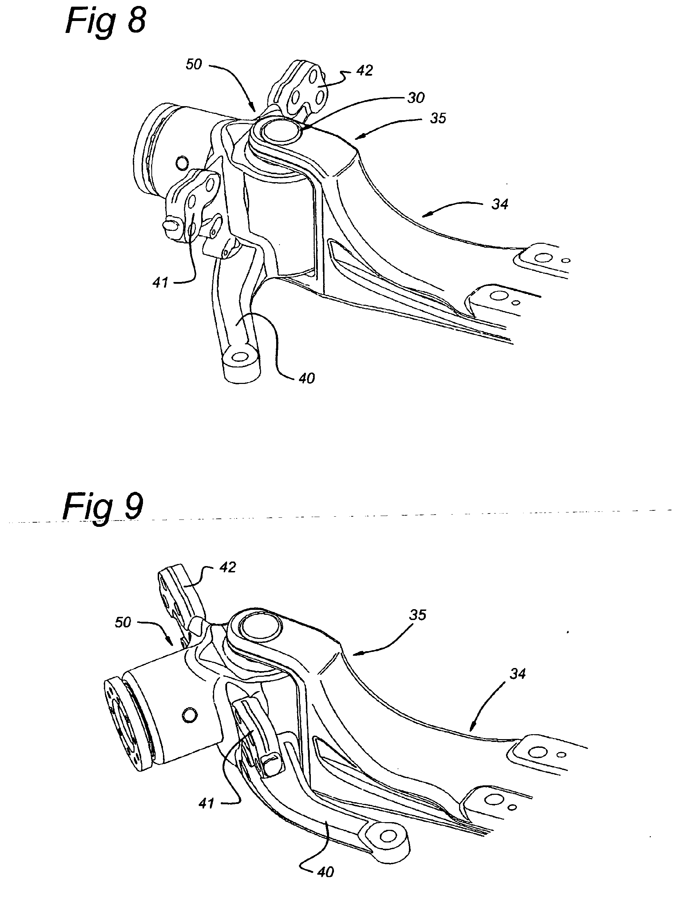

Figures 8, 9 and 10 show further views of the complete assembly.

Figure 11 shows a further embodiment.

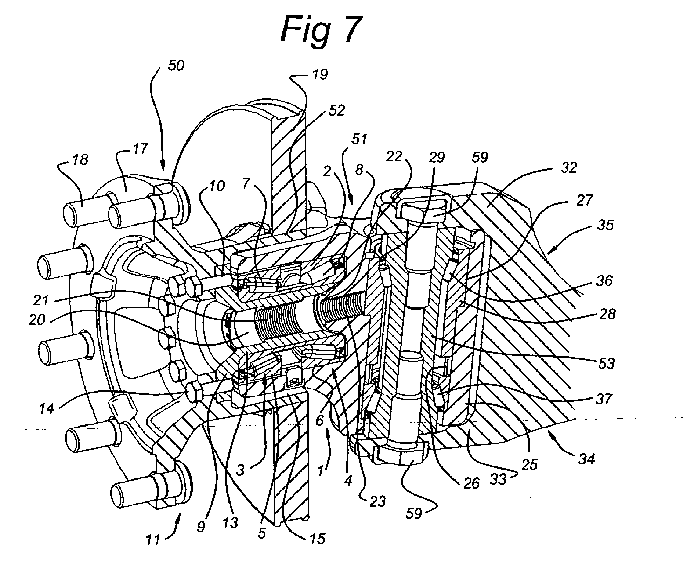

The assembly according to figure 7 consists of a hub bearing unit 50 and a vehicle suspension 35. This truck hub bearing unit 50 in turn consists of a truck corner module 51 having a corner housing or knuckle 1, which is provided with a bore 2, in which two taper roller bearings 3, 4 are accommodated. These taper roller bearings 3, 4 are arranged in an "O " configuration.

The taper roller bearings 3, 4 have a common inner ring 13, and two separate outer rings 5, 6. Two sets of taper rollers 7, respectively 8 are in contact with the raceways of the inner ring 13 and the outer rings 3, respectively 4.

The inner ring means 13 has a radially outwardly protruding flange 9, which has regularly spaced screw threaded holes 10. Onto the flange 9, a hub 11 is mounted by means of screws 14, which are screwed into the screw threaded holes 10. The hub 11 has a sleeve 12, which overlaps the corner housing 1, while leaving free a gap 15.

The hub has a radially outwardly extending flange 17, which carries screw threaded studs 18 onto which a wheel with wheel nuts (not shown) can be mounted. Furthermore, a brake disc 19 is mounted onto the disc mounting part 52 of the sleeve 12.

The common inner ring 9 has a bore 20 provided with an internal screw thread 21 and the corner housing has an abutment 22. By screwing a screw into the screw threaded part 21 and abutting this screw onto the abutment 22, the inner ring 9 together with the complete bearings 3, 4 can be dismounted.

Furthermore, the corner housing itself also has a screw threaded bore 23. By means of a screw (not shown) which is screwed in the screw threaded bore 23, and which bears for instance against the outer end of the flange 9, the bearings 3, 4 can be mounted into the corner housing 1.

Furthermore, the corner housing 1 is provided with a king pin fixing means 25, which has a through going bore with stepped portions 26, 27. Into this stepped bore, the outer ring 28 of a similar stepped shape is fitted by means of a spring clip 29. This outer ring 28 forms part of the kingpin means 30, which by means of bolts 31 is connected to the teeth 32, 33 of a fork 34, which is integrated with the vehicle suspension 35.

The outer ring means 28 forms part of the two taper roller bearings 36, 37, the raceways of which are integrated in respectively the outer ring means 28 and the kingpin 53 itself. The outer diameter of the outer rings differs in order to ease/reduce the stroke length for the mounting and dismounting.

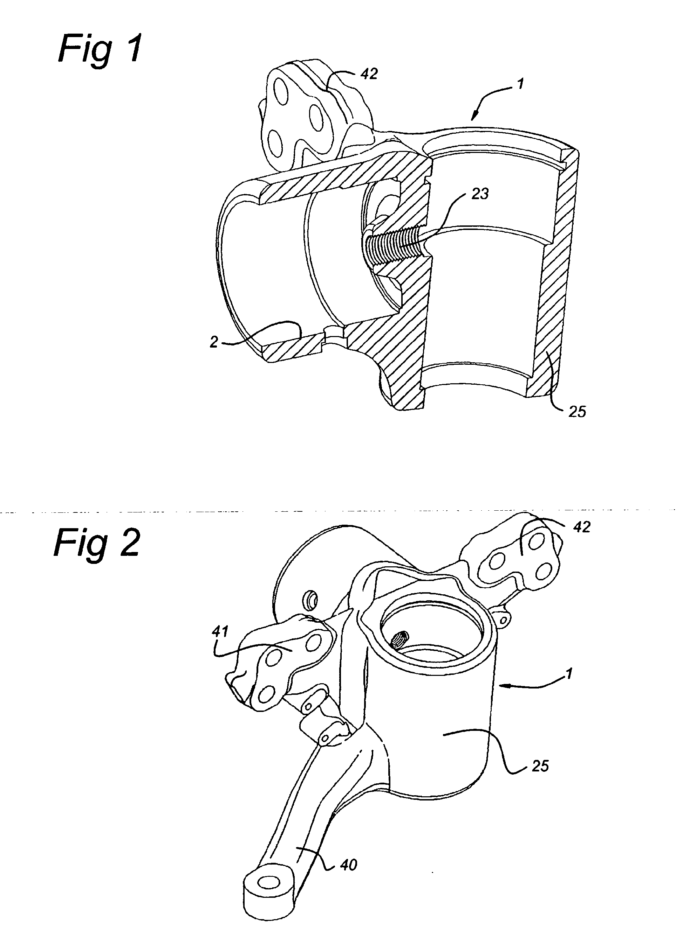

Figure 1 and 2 show the corner housing or knuckle 1 in isolation. This corner housing 1 is integrated with a lever arm 40 for engagement with a steering rod of the vehicle's steering system (not shown), as well as ears 41, 42, for mounting a brake calliper which can engage the brake disc 19. Furthermore, an encoder sensor for ABS/wheel bearing speed may be integrated in the corner housing 1.

The corner bearing housing can also be equipped with a sensor (internal or external) to measure/control the wheel load.

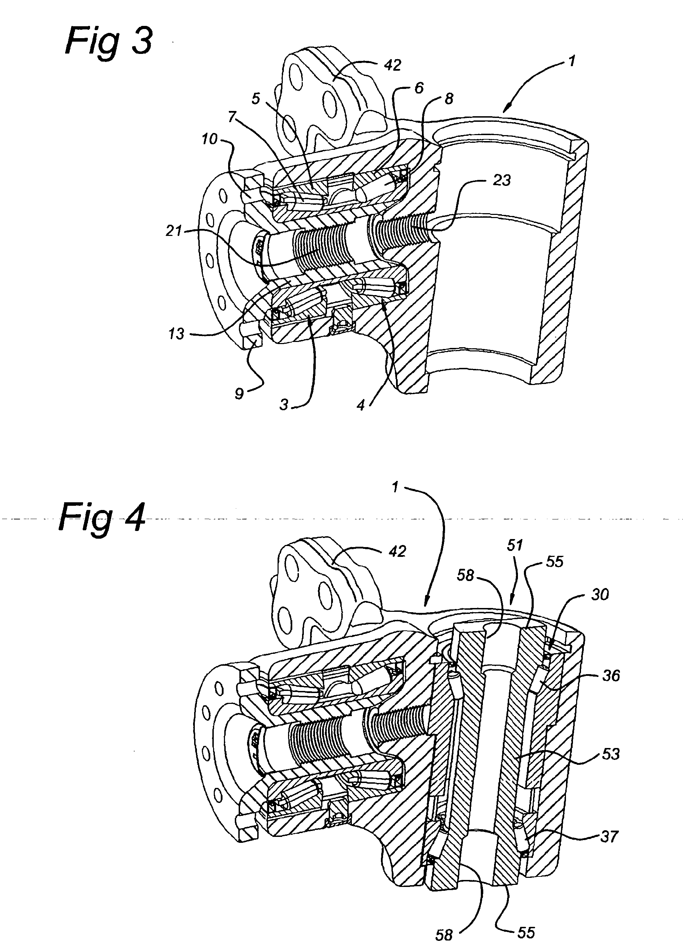

Figure 3 shows the corner housing according to figures 1 and 2 together with the wheel taper roller bearing 3, 4 in back to back arrangement or "O"configuration.

Figure 4 shows the complete truck corner module 51, comprising a corner housing 1 and the kingpin means 30.

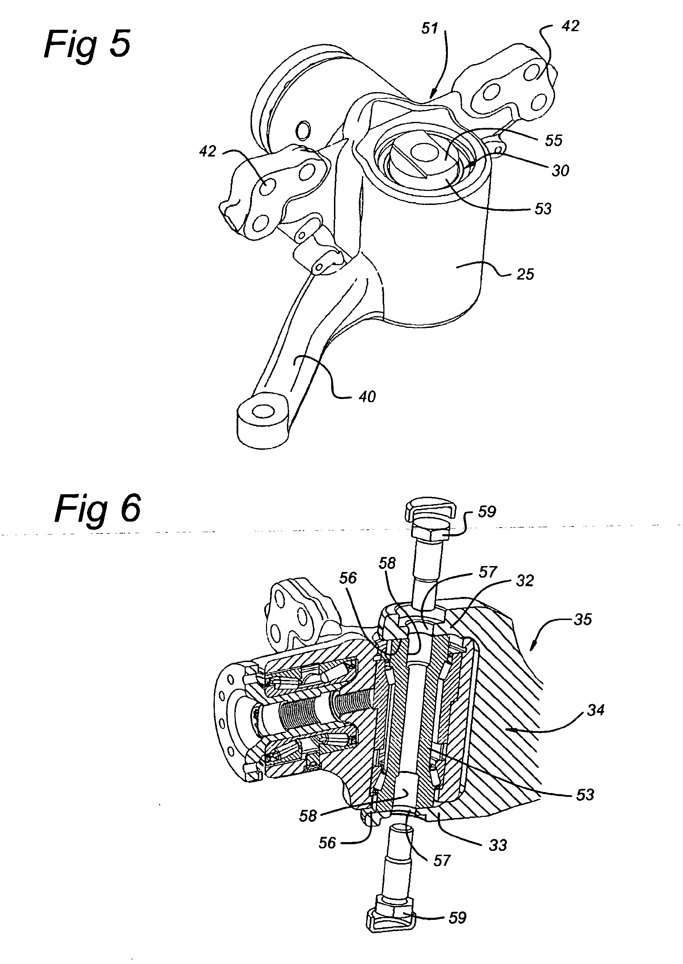

Figure 5 shows the complete truck corner module 51 in perspective.

The kingpin 53 has flat end faces 55, which, as shown in figure 6, come to bear against the facing surfaces 56 of the teeth 32, 33 of the fork 35 of the vehicle suspension 34. The teeth 32, 33 have holes 57, and the opposite ends of the kingpin 53 have screwthreaded bores 58. By means of bolts 59 the teeth 32, 33 are clamped firmly onto the surfaces 55 of the kingpin 53.

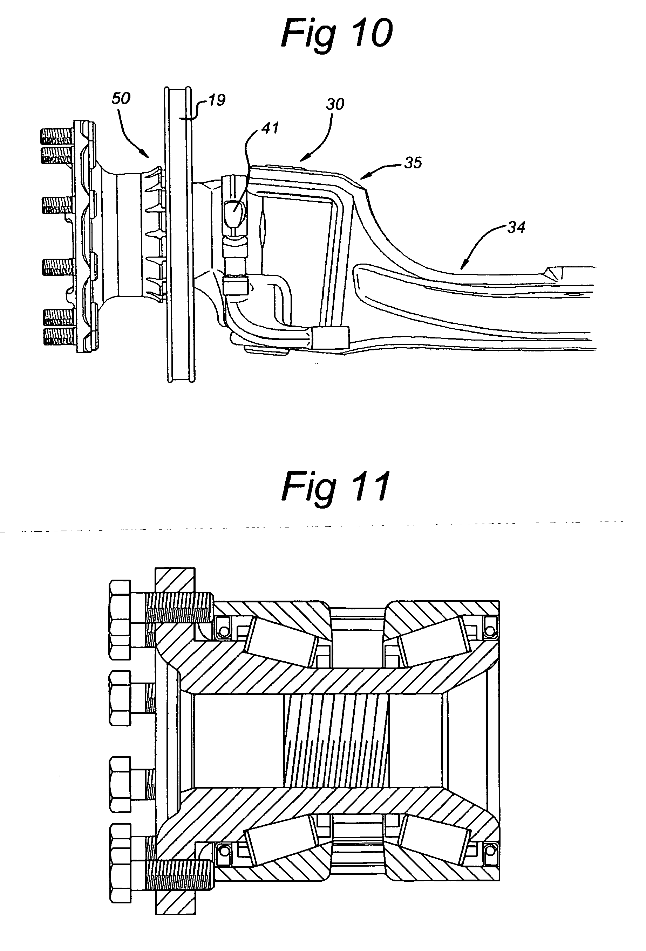

The front view of figure 10 shows the complete truck hub bearing unit including a brake disc brake 19 and suspension 34.

The unit can be shrink fitted or pressed into the housing; also, the unit can be pressed into the housing with pre-stressed bolts between the flange of the inner ring and outer ring (5) (see figure 11).

## Claims

1. Truck hub bearing unit, comprising two rolling element bearings (3, 4), which comprise an inner ring means (13) and an outer ring means (5, 6) provided with raceways which are in rolling contact with two series of rolling elements (7, 18), a fixed member (1) for connection to the wheel suspension of the truck and a rotatable member (9) for supporting a wheel, said rotatatable member (9) being supported with respect to the fixed member (1) by means of said rolling bearings (3, 4), the outer ring means (7, 8) being connected to the fixed member (1) and the inner ring means (13) being connected to the rotatable member, **characterized in that** the fixed element (1) is provided with kingpin fixing means (25-27).

2. Unit according to claim 1, wherein the kingpin fixing means comprise a throughgoing bore (26, 27) which is oriented transversely with respect to the axis of the hub bearing unit (3, 4).

3. Unit according to claim 2, wherein the bore has stepped portions (26, 27) of different diameter, the stepped portion (2, 7) with the larger diameter being positioned above the other stepped portion(s) (26).

4. Unit according to claim 3, wherein at the top and the bottom of the bore (26, 27) taper roller bearings (36, 37) in "O "configuration have been provided (angular contact roller or ball bearing or a combination thereof), as well as a kingpin (51), which is supported with respect to the fixing element by means of said bearings (36, 37).

5. Unit according to claim 4, wherein the kingpin (51) is provided with integrated inner rings, and the outer ring means (28) has stepped diameter portions corresponding to the stepped diameter bore (26, 27) of the fixing member (25).

6. Unit according to claims 4 or 5, wherein the kingpin (51) has connection means (31) at is top end and bottom end for connecting the fork end (32-34) of a truck suspension thereto.

7. Unit according to any of the preceding claims, wherein the fixed member comprises a corner housing (1) having a bore (2) within which the rolling element bearings (3, 4) are accommodated.

8. Unit according to claim 7, wherein the outer ring means (7, 8) is fitted with respect to the inner wall of the bore (2).

9. Unit according to any of the preceding claims, wherein the inner ring means comprises a common inner ring (13) provided with two raceways.

10. Unit according to claim 9, wherein the common inner ring (13) extends beyond the corner housing (1) and carries a hub (11) provided with a mounting flange (17) for mounting a wheel thereto.

11. Unit according to claim 10, wherein the common inner ring (13) at its end extending beyond the corner housing has a radially outwardly protruding mounting flange (9) onto which the hub (11) is connected.

12. Unit according to claim 10 or 11, wherein the hub (11) is provided with a sleeve part (12) which overlaps and at least partly surrounds the corner housing (1), a gap (15) being present in the overlap area.

13. Unit according to claim 12, wherein the sleeve part (12) is provided with means (50) for connecting a brake disk or brake drum thereto.

14. Unit according to any of claims 9-13, wherein the common inner ring (13) or common central shaft has a bore (20) which is provided with fixing means, e.g. an internal screw thread (21), and the corner housing (1) has an abutment (22), said fixing means (23) and abutment (22) being intended for engagement with a dismounting tool for dismounting of the hub bearing unit.

15. Unit according to claims 14, wherein the corner knuckle (9) housing (1) is provided with a screw threaded bore (23) which is aligned with the inner ring means bore (20), and the inner ring means has an abutment, said screw threaded bore (23) and abutment being intended for engagement with a mounting tool for mounting the hub bearing unit.

16. Unit according to claim 7, wherein the corner housing consists of one piece of forged iron, cast iron, or of a non-metallic material.

17. Unit according to claim 12, wherein the corner housing (1) has cooling ribs, which extend in the gap (15) in the overlap area.

18. Unit according to any of the preceding claims, wherein an integrated sensor is provided for monitoring/controlling the number of wheel rotations, temperature, etc.

19. Unit according to any of the preceding claims, wherein the housing/knuckle is made of a metallic, non-metallic or composite material.

20. Unit according to any of the preceding claims wherein the housing is made of a forging or cast iron.

21. Unit according to any of the preceding claims, wherein a brake disc or brake drum is provided.

22. Unit according to any of the preceding claims, wherein the inner ring means comprises separate inner rings mounted on a common shaft.

## Patentansprüche

1. Lastwagen-Radlagereinheit mit zwei Wälzlagern (3, 4), die Innenringmittel (13) und Außenringmittel (5, 6) aufweisen, die mit Laufbahnen versehen sind, die sich in Wälzkontakt mit zwei Reihen von Wälzkörpern (7, 8) befinden, einem feststehenden Element (1) zur Verbindung mit der Radaufhängung des Lastwagens und einem drehbaren Element (9) zum Halten eines Rades, wobei das drehbare Element (9) mit Bezug auf das feststehende Element (1) mithilfe von den Wälzlagern (3, 4) gelagert ist, die Außenringmittel (7, 8) mit dem feststehenden Element (1) verbunden sind und die Innenringmittel (13) mit dem drehbaren Element verbunden sind, **dadurch gekennzeichnet, dass** das feststehende Element mit einen Achsschenkelbolzen fixierenden Mitteln (25-27) versehen ist.

2. Einheit nach Anspruch 1, bei welcher die den Achsschenkelbolzen fixierenden Mittel eine Durchgangsbohrung (26, 27) aufweisen, die mit Bezug auf die Achse der Radlagereinheit (3, 4) transversal ausgerichtet ist.

3. Einheit nach Anspruch 2, bei welcher die Bohrung gestufte Bereiche (26, 27) unterschiedlichen Durchmessers besitzt, wobei der gestufte Bereich (27) mit dem größeren Durchmesser oberhalb des/der anderen gestuften Bereiche(s) (26) angeordnet ist.

4. Einheit nach Anspruch 3, bei welcher im oberen und unteren Bereich der Bohrung (26, 27) Kegelrollenlager (36, 37) in "O"-Anordnung vorgesehen sind (Schrägrollenlager oder Schrägkugellager oder eine Kombination aus diesen) ebenso wie ein Achsschenkelbolzen (51), der mit Bezug auf das feststehende Element mit Hilfe von Lagern (36, 37) gelagert ist.

5. Einheit nach Anspruch 4, bei welcher der Achsschenkelbolzen (51) mit integrierten Innenringen versehen ist, und die Außenringmittel (28) Bereiche mit gestuftem Durchmesser entsprechend der Bohrung (26, 27) mit gestuftem Durchmesser des feststehenden Elements (25) besitzen.

6. Einheit nach Anspruch 4 oder 5, bei welcher der Achsschenkelbolzen (51) an seinem oberen und unteren Ende Befestigungsmittel zum Befestigen des Gabelendes (32-34) einer Lastwagenaufhängung an ihm aufweist.

7. Einheit nach einem der vorhergehenden Ansprüche, bei welcher das feststehende Element ein Eckgehäuse (1) mit einer Bohrung (2) aufweist, in welcher die Wälzlager (3, 4) aufgenommen sind.

8. Einheit nach Anspruch 7, bei welcher die Außenringmittel (7, 8) in die Innenwandung der Bohrung (2) eingesetzt sind.

9. Einheit nach einem der vorhergehenden Ansprüche, bei welcher die Innenringmittel einen gemeinsamen Innenring (13) besitzen, der mit zwei Laufbahnen versehen ist.

10. Einheit nach Anspruch 9, bei welcher sich der gemeinsame Innenring (13) über das Eckgehäuse (1) erstreckt und eine Nabe (11) trägt, die mit einem Montageflansch (17) zur Montage eines Rades an ihm versehen ist.

11. Einheit nach Anspruch 10, bei welcher der gemeinsame Innenring (13) an seinem sich über das Eckgehäuse hinaus erstreckenden Ende einen radial nach außen vorstehenden Montageflansch (9) aufweist, an welchem die Nabe (11) angebracht ist.

12. Einheit nach Anspruch 10 oder 11, bei welcher die Nabe (11) mit einem Hülsenteil (12) versehen ist, welches das Eckgehäuse (1) überlappt und wenigstens teilweise umgibt, wobei ein Spalt (15) in dem Überlappungsbereich vorhanden ist.

13. Einheit nach Anspruch 12, bei welcher der Hülsenteil (12) mit Mitteln (50) zum Anbringen einer Bremsscheibe oder Bremstrommel an ihm versehen ist.

14. Einheit nach einem der Ansprüche 9 bis 13, bei welchem der gemeinsame Innenring (13) oder eine gemeinsame Mittelwelle eine Bohrung (20) besitzt, die mit Befestigungsmitteln, z. B. einem Innenschraubengewinde (21), versehen ist und das Eckgehäuse (1) eine Anlage (22) besitzt, wobei die Befestigungsmittel (23) und die Anlage (22) für den Eingriff mit einem Demontagewerkzeug zum Demontieren der Radlagereinheit vorgesehen sind.

15. Einheit nach Anspruch 14, bei welcher das Eckgelenk(9)gehäuse (1) mit einer Gewindebohrung (23) versehen ist, die mit der Bohrung (20) der Innenringmittel fluchtet, und die Innenringmittel eine Anlage besitzen, wobei die Schraubgewindebohrung (23) und die Anlage für einen Eingriff mit einem Montagewerkzeug zum Montieren der Radlagereinheit gedacht sind.

16. Einheit nach Anspruch 7, bei welcher das Eckgehäuse aus einem Stück Schmiedestahl, Gussstahl oder aus einem nicht metallischen Material besteht.

17. Einheit nach Anspruch 12, bei welcher das Eckgehäuse (1) Kühlrippen besitzt, die sich in den Spalt (15) in dem Überlappungsbereich erstrecken.

18. Einheit nach einem der vorhergehenden Ansprüche, bei welcher ein integrierter Sensor zum Überwachen/Kontrollieren der Anzahl an Radumdrehungen, Temperatur usw. vorgesehen ist.

19. Einheit nach einem der vorhergehenden Ansprüche, bei welcher das Gehäuse/Gelenk aus einem metallischen, nicht metallischen oder Kompositmaterial besteht.

20. Einheit nach einem der vorhergehenden Ansprüche, bei welcher das Gehäuse aus einem Schmiede- oder Gussstahl hergestellt ist.

21. Einheit nach einem der vorhergehenden Ansprüche, bei welcher eine Bremsscheibe oder Bremstrommel vorgesehen ist.

22. Einheit nach einem der vorhergehenden Ansprüche, bei welcher die Innenringmittel getrennte Innenringe aufweisen, die auf einer gemeinsamen Welle montiert sind.

## Revendications

1. Unité de support de moyeu de camion, comprenant deux roulements à éléments roulants (3, 4), qui comprennent un moyen formant bague intérieure (13) et un moyen formant bague extérieure (5, 6) pourvus de chemins de roulement qui sont en contact roulant avec deux séries d'éléments roulants (7, 18), un élément fixe (1) permettant la connexion avec la suspension de roue du camion et un élément rotatif (9) pour supporter une roue, ledit élément rotatif (9) étant supporté, par rapport à l'élément fixe (1), au moyen desdits roulements (3, 4), le moyen formant bague extérieure (7, 8) étant connecté à l'élément fixe (1) et le moyen formant bague intérieure (13) étant connecté à l'élément rotatif, **caractérisée en ce que** l'élément fixe (1) est pourvu d'un moyen de fixation à pivot central (25-27).

2. Unité selon la revendication 1, dans laquelle le moyen de fixation à pivot central comprend un trou traversant (26, 27) qui est orienté transversalement par rapport à l'axe de l'unité de support de moyeu (3, 4).

3. Unité selon la revendication 2, dans laquelle le trou comporte des parties étagées (26, 27) de différent diamètre, la partie étagée (27) ayant le plus grand diamètre étant positionnée au-dessus de la ou les autre(s) partie(s) étagée(s) (26).

4. Unité selon la revendication 3, dans laquelle, en haut et en bas du trou (26, 27), des roulements à rouleaux coniques (36, 37) en "O" ont été placés (rouleau à contact angulaire ou roulement à billes angulaire ou une combinaison de ceux-ci), ainsi qu'un pivot central (51) qui est supporté, par rapport à l'élément de fixation, au moyen desdits roulements (36, 37).

5. Unité selon la revendication 4, dans laquelle le pivot central (51) est pourvu de bagues intérieures intégrées, et le moyen formant bague extérieure (28) a des parties à diamètres étagés correspondant au trou à diamètre étagé (26, 27) de l'élément de fixation (25).

6. Unité selon la revendication 4 ou 5, dans laquelle le pivot central (51) comporte un moyen de connexion (31) à son extrémité supérieure et à son extrémité inférieure pour permettre la connexion de l'extrémité fourchue (32-34) d'une suspension de camion.

7. Unité selon l'une quelconque des revendications précédentes, dans laquelle l'élément fixe comprend un boîtier d'angle (1) comportant un trou (2) dans lequel sont logés les roulements à éléments roulants (3, 4).

8. Unité selon la revendication 7, dans laquelle le moyen formant bague extérieure (7, 8) est monté par rapport à la paroi intérieure du trou (2).

9. Unité selon l'une quelconque des revendications précédentes, dans laquelle le moyen formant bague intérieure comprend une bague intérieure commune (13) pourvue de deux chemins de roulement.

10. Unité selon la revendication 9, dans laquelle la bague intérieure commune (13) s'étend au-delà du boîtier d'angle (1) et porte un moyeu (11) pourvu d'une joue de montage (17) destinée au montage d'une roue.

11. Unité selon la revendication 10, dans laquelle la bague intérieure commune (13), à son extrémité s'étendant au-delà du boîtier d'angle, comporte une joue de montage faisant saillie radialement vers l'extérieur (9) sur laquelle le moyeu (11) est connecté.

12. Unité selon la revendication 10 ou 11, dans laquelle le moyeu (11) est pourvu d'une partie manchon (12) qui chevauche et entoure au moins partiellement le boîtier d'angle (1), un espace (15) étant présent dans la zone de chevauchement.

13. Unité selon la revendication 12, dans laquelle la partie manchon (12) est munie d'un moyen (50) permettant de monter un disque de frein ou un tambour de frein sur celle-ci.

14. Unité selon l'une quelconque des revendications 9 à 13, dans laquelle la bague intérieure commune (13) ou un arbre central commun comporte un trou (20) qui est pourvu d'un moyen de fixation, par exemple un filetage interne (21), et le boîtier d'angle (1) comporte une butée (22), ledit moyen de fixation (23) et ladite butée (22) étant destinés à être mis en contact avec un outil de démontage pour le démontage de l'unité de support de moyeu.

15. Unité selon la revendication 14, dans laquelle le boîtier (1) de rotule d'angle (9) est pourvu d'un trou fileté (23) qui est aligné avec le trou de moyen formant bague intérieure (20), et le moyen formant bague intérieure comporte une butée, ledit trou fileté (23) et la butée étant destinés à être mis en contact avec un outil de montage pour le montage de l'unité de support de moyeu.

16. Unité selon la revendication 7, dans laquelle le boîtier d'angle consiste en une pièce en fer forgé, en fonte ou en matériau non métallique.

17. Unité selon la revendication 12, dans laquelle le boîtier d'angle (1) comporte des ailettes de refroidissement, qui s'étendent dans l'espace (15) situé dans la zone de chevauchement.

18. Unité selon l'une quelconque des revendications précédentes, dans laquelle un capteur intégré est prévu pour surveiller/commander le nombre de tours de roue, la température, etc.

19. Unité selon l'une quelconque des revendications précédentes, dans laquelle le boîtier/rotule est fait d'un matériau métallique, non métallique ou composite.

20. Unité selon l'une quelconque des revendications précédentes, dans laquelle le boîtier est fait d'une pièce forgée ou en fonte.

21. Unité selon l'une quelconque des revendications précédentes, dans laquelle un disque de frein ou un tambour de frein est prévu.

22. Unité selon l'une quelconque des revendications précédentes, dans laquelle le moyen formant bague intérieure comprend des bagues intérieures distinctes montées sur un axe commun.
